# EUROPÄISCHE PATENTSCHRIFT

(11) **EP 2 885 550 B1**
(45) Veröffentlichungstag und Bekanntmachung des Hinweises auf die Patenterteilung: **24.10.2018**
(21) Anmeldenummer: 13771363.2
(22) Anmeldetag: 09.08.2013
(51) Int. Cl.: F16D 13/58, F16D 25/12, F16D 25/08

(54) **TRANSPORTSICHERUNG, INSBESONDERE FÜR DEN KOLBEN EINES AUSRÜCKLAGERS**
TRANSPORT LOCK, IN PARTICULAR FOR THE PISTON OF A CLUTCH RELEASE BEARING
DISPOSITIF D'IMMOBILISATION PENDANT LE TRANSPORT, DESTINÉ NOTAMMENT AU PISTON D'UNE BUTÉE DE DÉBRAYAGE

(30) Priorität: 16.08.2012 DE 102012214543; 16.08.2012 DE 102012214548; 16.08.2012 DE 102012214553; 20.06.2013 DE 102013211664
(43) Veröffentlichungstag der Anmeldung: 24.06.2015
(73) Patentinhaber: Schaeffler Technologies AG & Co. KG, 91074 Herzogenaurach (DE)
(72) Erfinder: BOSNJAK, Daniel, F-67470 Seltz (FR)
(86) Internationale Anmeldenummer: PCT/DE2013/200112
(87) Internationale Veröffentlichungsnummer: WO 2014/026686

(56) Entgegenhaltungen:
- DE-A1- 19 746 538
- DE-A1-102008 004 027
- DE-A1-102011 081 381

## Beschreibung

Die Erfindung betrifft eine Transportsicherung, insbesondere für den Kolben eines Ausrücklagers und findet beispielsweise bei einem Ausrücksystem für konventionelle Kupplungen Anwendung.
Aus der Druckschrift DE 10 2009 035 913 A1 ist eine Transportsicherung für axial bewegliche, konzentrisch angeordnete Bauteile einer Kupplung oder eines Getriebes eines Kraftfahrzeuges, insbesondere für ein an dem Gehäuse eines konzentrischen Nehmerzylinders angeordnetes Ausrücklager bekannt. Dazu ist ein als Anschlag für das axial bewegliche Ausrücklager dienendes Sicherungselement in axialer Richtung auf das Gehäuse aufschiebbar und unter Vorspannung in einer Sicherungsposition klemmbar. Durch Erschütterungen auf dem Transportweg kann sich dieses kappenartige Sicherungselement jedoch vom Gehäuse lösen, wodurch die Gefahr besteht, dass das Ausrücklager vom Gehäuse des Nehmerzylinders rutscht.
Gemäß einer noch nicht veröffentlichten Lösung ist eine Transportsicherung für Kupplungen bekannt, welche am Innendurchmesser des Gehäuses oder an der Führungshülse befestigt wird. Die Transportsicherung hat die Aufgabe, das Ausrücklager des Nehmerzylinders in einer bestimmten, vordefinierten, axialen Position zu halten, bis das Bauteil in seiner Einbaulage montiert wird und weist die Form eines offenen Rings auf, der durch eine Scheibe gebildet ist, die mit einer Bohrung versehen ist. Die Scheibe ist auf einer Seite durch einen Schlitz unterbrochen. Auf der dem Schlitz gegenüberliegenden Seite der Scheibe 2 weist die Transportsicherung eine Engstelle auf. Die Transportsicherung besitzt weiterhin einen senkrecht zur Fläche der Scheibe gerichteten Wulst auf, der einen Absatz besitzt. Aufgrund ihrer Geometrie ist die Transportsicherung nicht für einen begrenzten radialen Bauraum geeignet. Weiterhin beschreibt die DE 10 2008 004 027 A1 eine Transportsicherung für ein Ausrücksystem gemäß dem Oberbegriff des Patentanspruchs 1.
Aufgabe der Erfindung ist es, eine Transportsicherung für den Kolben eines Ausrücklagers zu entwickeln, welche funktionssicher ist, einen einfachen konstruktiven Aufbau aufweist und in einem vorgegebenen Bauraum eingesetzt werden kann, wobei der Radialbauraum begrenzt ist.

Diese Aufgabe wird mit den kennzeichnenden Merkmalen des ersten Schutzanspruchs gelöst.

Vorteilhafte Ausgestaltungen ergeben sich aus den Unteransprüchen.

Es liegt eine Transportsicherung für den Kolben eines Nehmerzylinders bzw. ein Ausrücklager eines Nehmerzylinders vor, die in Form eines Halterings ausgebildet ist, der in Richtung zum Kolben eine sich in radialer Richtung erstreckte Anschlagfläche aufweist und axial fixiert auf dem Kolben in einem inneren Hohlraum des Ausrücklagers befestigt ist. Dazu ist mittels Schnapphaken des Halterings und komplementärer Vertiefung im Gehäuse des Ausrücklagers (Ausrückergehäuse) eine axiale Sicherung des Halterings vorhanden, so dass sich dieser in axialer Richtung nicht von dem Gehäuse lösen kann. Die Schnapphaken werden in Form von radial nach innen weisenden Ausklinkungen aus einem im Wesentlichen zylindrischen Bereich des Halterings ausgebildet.

Die Schnapphaken begrenzen somit auch den Kolbenanschlag am Gehäuse, so dass ein Herausgleiten des Kolbens und des Ausrücklagers verhindert wird. Der Haltering weist den im Wesentlichen zylinderförmigen Abschnitt auf, dessen innere Umfangsfläche an einer äußeren umfangsseitigen Gehäusefläche zentriert wird. Die Schnapphaken greifen in dem korrespondierenden Bauraum des Gehäuses ein. Im Montagezustand sind die Schnapphaken frei.

Um den Kontakt zwischen dem Kolben und dem Haltering herzustellen und damit zu gewährleisten, dass Kolben bzw. Ausrücklager beim Transportaxial fixiert sind, wird eine Feder verwendet, welche den Kolben gegen den Haltering und damit den Haltering mit seinen Schnapphaken gegen eine axiale Anschlagsfläche der Vertiefung schiebt. Durch axiale Stirnflächen der Schnapphaken, die an der axialen Anschlagfläche zur Anlage kommen, wird die Bewegung des Kolbens und damit des Ausrücklagers begrenzt.

Der Kontakt zwischen dem Bund des Halterings und der Kolbenanschlagsfläche muss für die Transportsicherung gewährleistet sein. Der Bund besitzt dabei jedoch eine nur geringe radial nach außen weisende Ausdehnung.

Für eine saubere Montage werden die Schnapphaken an ihren Innenseiten mit leicht zylindrischen Flächen versehen. Somit entstehen keine scharfen Kanten. Durch diese Flächen wird verhindert, dass bei der Montage Späne im Gehäuse entstehen. Der Haltering ist vorzugsweise als Stahlblech ausgeführt. Aus Kostengründen kann er aber auch aus Kunststoff bestehen.

Die Schnapphaken sind insbesondere bei der Fertigung des Halteringes aus Stahlblech in Form von den radial nach innen weisenden Ausklinkungen aus dem im Wesentlichen zylindrischen Bereich des Halterings ausgebildet.

Der Haltering wird somit insbesondere aus einem im Wesentlichen zylindrischen Rohrabschnitt gebildet, der an einem Ende einen radial nach außen weisenden Bund aufweist und am anderen Ende mit radial nach innen weisenden Schnapphaken versehen ist, die bevorzugt durch Ausklinkungen im Rohrabschnitt hergestellt wurden.

Der Einsatzbereich der Erfindung ist die Transportsicherung eines Ausrücksystems für konventionelle Kupplungen, welches für die hydraulische Betätigung von Kupplungen verwendet wird.

Durch die erfindungsgemäße Lösung wird zur Sicherung des Ausrücklagers bzw. Kolbens eines Nehmerzylinders beim Transport ein Haltering mit geringer radialer Ausdehnung vorgesehen, der eine in radialer Richtung erstreckte Anschlagfläche aufweist und der in einem inneren Hohlraum des Ausrücklagers angeordnet werden kann, wobei mittels radial nach innen weisender Schnapphaken und komplementärer Vertiefung im Ausrückergehäuse eine Sicherung des Halterings durchgeführt wird.

Die Erfindung wird nachfolgend an einem Ausführungsbeispiel und zugehörigen Zeichnungen näher erläutert.

Es zeigen:
- Figur 1: den Haltering 6 im eingebauten Zustand,
- Figur 2: die dreidimensionale Darstellung einer Hälfte des Halteringes 6,
- Figur 3: die dreidimensionale Darstellung des Bereiches eines Schnapphakens 6.3 eines Halterings 6,
- Figur 4: eine Detailansicht des transportgesicherten Nehmerzylinders.

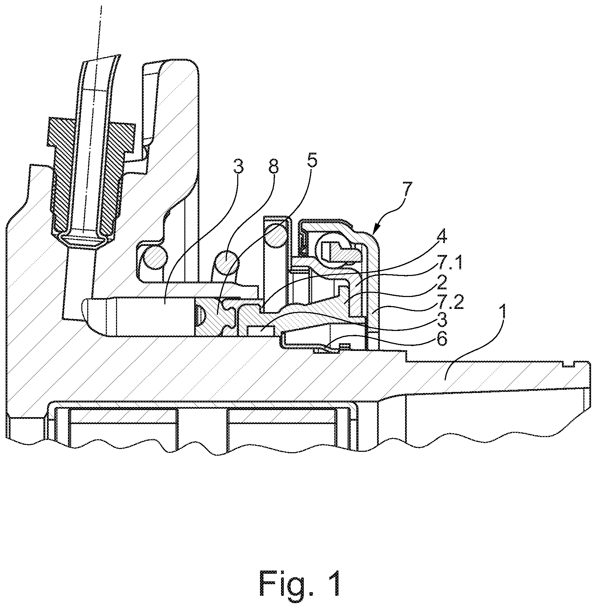

In Figur 1 wird ein Teillängsschnitt eines Nehmerzylinders gezeigt, der ein Gehäuse 1 mit einer umfangsseitigen Gehäusefläche 1.1 aufweist, auf welcher der Kolben 2 konzentrisch und axial bewegbar angeordnet ist. An einem Ende des Kolbens 2 ist eine Dichtung 5 mit der Dichtungsaufnahme 4 angebracht, die zwischen Gehäuse 1 und Kolben 2 in einer Ringnut 3 des Gehäuses 1 abdichtet. An das andere Ende des Kolbens 2 schließt sich das Ausrücklager 7 an. Mit Hilfe einer Feder 8, die sich an einem nicht bezeichneten radial nach außen weisenden Flansch des Gehäuses 1 und über das Ausrücklager 7 (über dessen Innenring 7.1) am Kolben 2 abstützt, wird der Kolben 2 an einen Haltering 6 angedrückt, der auf dem Gehäuse axial fixiert befestigt ist. An dem der Dichtung 5 abgewandten Ende des Kolbens 2 wird der Innenring 7.1 des Ausrücklagers 7 befestigt.

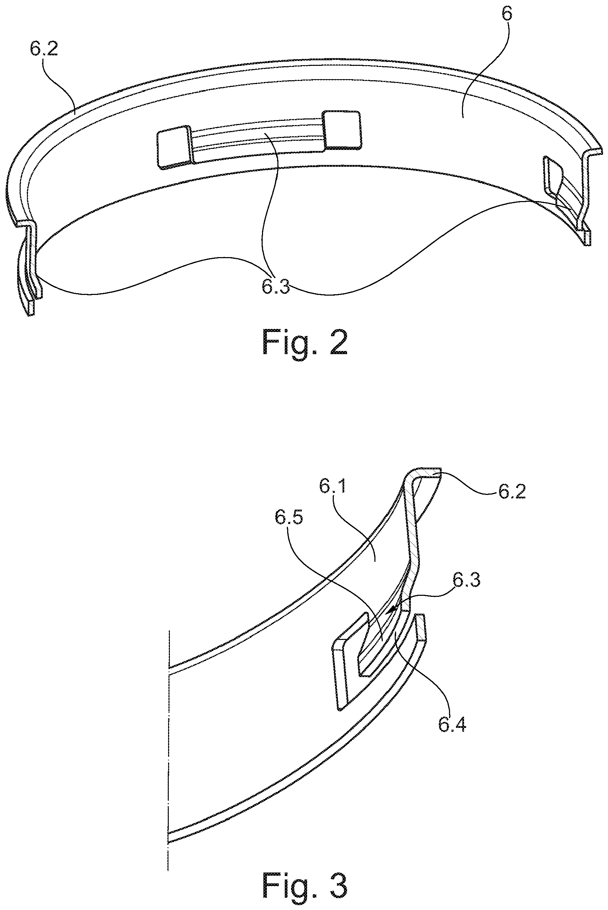

Figur 2 zeigt, dass der Haltering 6 vier Schnapphaken 6.3 besitzt, welche im Winkel von 90° zueinander versetzt angeordnet sind. Der Haltering 6 ist aus Blech gefertigt und in der Art eines Rohrabschnittes bzw. Ringes mit einem im Wesentlichen zylinderförmigen Bereich 6' ausgeführt, wobei ein Ende um ca. 90° radial nach außen gebogen wurde und dadurch einen radial nach außen weisenden Bund 6.2 bildet. Die Schnapphaken 6.3 werden durch radial nach innen weisende Ausklinkungen im zylinderförmigen Bereich 6' gebildet und weisen gemäß Figur 3 an ihren vom Bund 6.2 wegweisenden Enden axiale Stirnflächen 6.4 auf, welche die Bewegung des Kolbens 2 begrenzen. Die Schnapphaken 6.3 haben eine nach innen weisende zylindrische Fläche 6.5, um keine Späne durch Montage des Halterings 6 im Gehäuse 1 zu erzeugen.

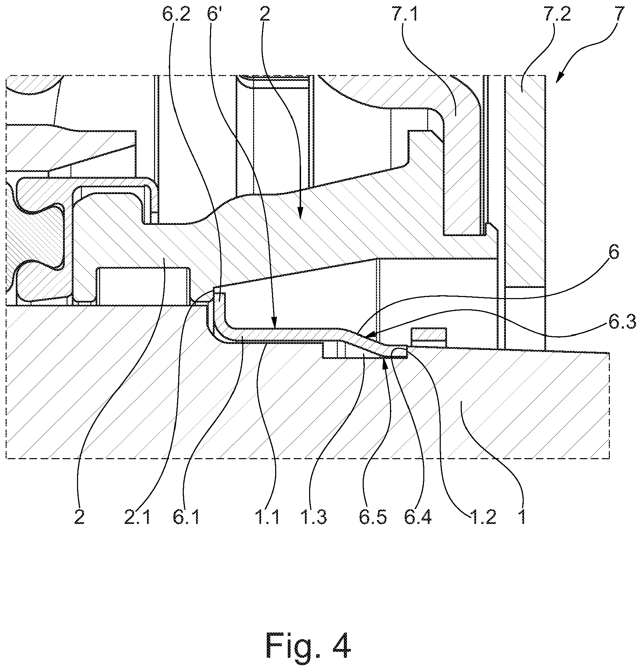

Figur 4 zeigt eine Detailzeichnung der eingebauten Transportsicherung des Nehmerzylinders in Form des Halterings 6, der mit seinen Schnapphaken 6.3 in eine Vertiefung 1.3 des Gehäuses 1 eingreift. Die Vertiefung 1.3 ist in der Art einer umlaufenden Nut ausgebildet und weist eine Anschlagfläche 1.2 auf, an welcher die axialen Stirnflächen 6.4 der Schnapphaken 6 durch die Vorspannkraft der Feder 8 (s. Figur 1) anliegen, denn die Feder 8 (Figur 1) drückt den Kolben 2 mit seiner Anlagefläche 2.1 gegen den Bund 6.2 des Halterings 6 und diesen somit in axialer Richtung mit den Schnapphaken 6.3 gegen die Anschlagfläche 1.2 der Vertiefung 1.3 im Kolben 1.

Dadurch wird der Kolben 2 gegen eine axiale Verschiebung auf dem Gehäuse 1 während des Transports gesichert. Da der Innenring 7.1 des Ausrücklagers 7 mit dem Kolben 2 in Verbindung steht, wird auch dieses gemeinsam mit dem Kolben 2 axial gesichert. Der Haltering 6 liegt mit seinem Innendurchmesser nicht auf der umfangsseitigen Gehäusefläche 1.1 auf, sondern ist etwas davon beabstandet. Die Zentrierung des Halterings 6 auf dem Gehäuse 1 erfolgt dabei über die Schnapphaken 6.3.

Gemäß eines nicht dargestellten Ausführungsbeispiels ist es auch möglich, die Schnapphaken an dem, dem Bund gegenüberliegenden Ende des Halterings 6, durch endseitige nach innen gebogene Rastelemente oder anderweitig auszubilden.

Der Haltering 7 wird auf dem Gehäuse 1 in dem inneren Hohlraum des Ausrücklagers 7 befestigt und im inneren Raum des Kolbens (der als Ringkolben ausgebildet ist) und im Befestigungsbereich des Halterings vom Kolben beabstandet. Die Montage des Halterings 6 erfolgt durch einen Zwischenraum zwischen dem Innendurchmesser des Außenrings 7.2 und dem Außendurchmesser des Gehäuses 1.

Zur Demontage des Halterings 6 werden die Schnapphaken 6.3 einfach nach außen gebogen.

### Bezugszeichenliste

- 1: Gehäuse
- 1.1: äußere umfangsseitige Gehäusefläche
- 1.2: Anschlagfläche
- 1.3: Vertiefung im Gehäuse
- 2: Kolben
- 2.1: Anlagefläche
- 3: Ringnut
- 4: Aufnahme der Dichtung
- 5: Dichtung
- 6: Haltering
- 6': zylinderförmiger Bereich des Halterings
- 6.1: innere Umfangsfläche des Halterings
- 6.2: Bund
- 6.3: Schnapphaken
- 6.4: axiale Stirnfläche
- 6.5: zylindrische Fläche
- 7: Ausrücklager
- 7.1: Innenring
- 7.2: Außenring
- 8: Feder

## Patentansprüche

1. Transportsicherung für ein Ausrücksystem, insbesondere einen Nehmerzylinder eines Kraftfahrzeuges, wobei auf einem Gehäuse (1) konzentrisch ein axial beweglicher Kolben (2) und ein mit dem Kolben (2) verbundenes Ausrücklager (7) angeordnet sind, wobei ein Haltering (6) einen in radialer Richtung nach außen erstreckenden Bund (6.2) aufweist und auf dem Gehäuse (1) in einem inneren Hohlraum des Ausrücklagers (7) mittels Schnapphaken (6.3) und komplementärer Vertiefung (1.3) am Gehäuse (1) befestigt ist, und wobei der Kolben (2) mit einer Anlagefläche (2.1) an dem Bund (6.2) des Halterings (6) anliegt, derart, dass der Haltering (6) die axiale Bewegung des Kolbens (2) begrenzt, **dadurch gekennzeichnet, dass** die Schnapphaken (6.3) in Form von radial nach innen weisenden Ausklinkungen aus einem im Wesentlichen zylindrischen Bereich (6') des Halterings (6) ausgebildet sind.

2. Transportsicherung nach Anspruch 1, **dadurch gekennzeichnet, dass** die Schnapphaken (6.3) mit ihrem von dem Bund (6.2) wegweisenden Ende in der Vertiefung (1.3) an einer Anschlagfläche (1.2) anliegen, welche die Bewegung des Kolbens (1) begrenzt.

3. Transportsicherung nach einem der Ansprüche 1 bis 2, **dadurch gekennzeichnet, dass** eine innere Umfangsfläche (6.1) des im Wesentlichen zylindrischen Bereichs (6') des Halterings (6) an einer äußeren umfangsseitigen Gehäusefläche (1.1) zentriert ist, wobei die innere Umfangsfläche (6.1) zwischen dem Bund (6.2) und den Schnapphaken (6.3) ausgebildet ist.

4. Transportsicherung nach einem der Ansprüche 1 bis 3, **dadurch gekennzeichnet, dass** die Schnapphaken (6.3) im Montagezustand frei sind.

5. Transportsicherung nach einem der Ansprüche 2 bis 4 **dadurch gekennzeichnet, dass** die Schnapphaken (6.3) axiale Stirnflächen (6.4) aufweisen, die die Bewegung des Kolbens (2) begrenzen, wenn sie mit der Anschlagfläche (1.2) in Kontakt kommen.

6. Transportsicherung nach einem der Ansprüche 2 bis 5, **dadurch gekennzeichnet, dass** eine Feder (8) den Kolben (2) an den Haltering (6) schiebt und der Haltering (6) mit den axialen Stirnflächen (6.4) der Schnapphaken (6.3) gegen die Anschlagfläche (1.2) wirkt, wobei sich die Feder (6) zwischen Gehäuse (1) und Ausrücklager (7) abstützt.

7. Transportsicherung nach einem der Ansprüche 5 bis 6, **dadurch gekennzeichnet, dass** die Schnapphaken (6.3) in Richtung zu den axialen Stirnflächen (6.4) eine im Wesentlichen zylindrische Fläche (6.5) aufweisen.

8. Transportsicherung nach einem der Ansprüche 1 bis 7, **dadurch gekennzeichnet, dass** der Haltering (6) aus Metall oder Kunststoff besteht.

## Claims

1. Transport lock for a release system, in particular a slave cylinder of a motor vehicle, an axially movable piston (2) and a clutch release bearing (7) which is connected to the piston (2) being arranged concentrically on a housing (1), a securing ring (6) having a collar (6.2) which extends in the radial direction to the outside, and the said securing ring (6) being fastened on the housing (1) in an inner cavity of the clutch release bearing (7) by means of snap-action hooks (6.3) and a complementary depression (1.3) on the housing (1), and the piston (2) bearing by way of a bearing face (2.1) against the collar (6.2) of the securing ring (6), in such a way that the securing ring (6) limits the axial movement of the piston (2), **characterized in that** the snap-action hooks (6.3) are configured in the form of radially inwardly pointing notches from a substantially cylindrical region (6') of the securing ring (6).

2. Transport lock according to Claim 1, **characterized in that** the snap-action hooks (6.3) bear by way of their end which points away from the collar (6.2) against a stop face (1.2) in the depression (1.3), which stop face (1.2) limits the movement of the piston (1).

3. Transport lock according to either of Claims 1 and 2, **characterized in that** an inner circumferential face (6.1) of the substantially cylindrical region (6') of the securing ring (6) is centred on an outer circumferentialside housing face (1.1), the inner circumferential face (6.1) being configured between the collar (6.2) and the snap-action hooks (6.3).

4. Transport lock according to one of Claims 1 to 3, **characterized in that** the snap-action hooks (6.3) are free in the assembled state.

5. Transport lock according to one of Claims 2 to 4, **characterized in that** the snap-action hooks (6.3) have axial end faces (6.4) which limit the movement of the piston (2) when they come into contact with the stop face (1.2) .

6. Transport lock according to one of Claims 2 to 5, **characterized in that** a spring (8) pushes the piston (2) onto the securing ring (6), and the securing ring (6) acts by way of the axial end faces (6.4) of the snap-action hooks (6.3) against the stop face (1.2), the spring (6) being supported between the housing (1) and the clutch release bearing (7).

7. Transport lock according to either of Claims 5 and 6, **characterized in that** the snap-action hooks (6.3) have a substantially cylindrical face (6.5) in the direction of the axial end faces (6.4).

8. Transport lock according to one of Claims 1 to 7, **characterized in that** the securing ring (6) consists of metal or plastic.

## Revendications

1. Dispositif d'immobilisation pendant le transport pour un système de débrayage, en particulier pour un cylindre récepteur d'un véhicule automobile, un piston (2) déplaçable axialement et un palier de débrayage (7) connecté au piston (2) étant disposés concentriquement sur un boîtier (1), une bague de retenue (6) présentant un épaulement (6.2) s'étendant vers l'extérieur dans la direction radiale et étant fixée sur le boîtier (1) dans une cavité interne du palier de débrayage (7) au moyen de crochets d'encliquetage (6.3) et d'un renfoncement complémentaire (1.3) au niveau du boîtier (1), et le piston (2) s'appliquant avec une surface d'appui (2.1) contre l'épaulement (6.2) de la bague de retenue (6), de telle sorte que la bague de retenue (6) limite le mouvement axial du piston (2), **caractérisé en ce que** les crochets d'encliquetage (6.3) sont réalisés sous la forme d'encoches orientées radialement vers l'intérieur, constituées d'une région essentiellement cylindrique (6') de la bague de retenue (6).

2. Dispositif d'immobilisation pendant le transport selon la revendication 1, **caractérisé en ce que** les crochets d'encliquetage (6.3) avec leur extrémité orientée à l'opposé de l'épaulement (6.2) s'appliquent dans le renfoncement (1.3) contre une surface de butée (1.2) qui limite le mouvement du piston (1).

3. Dispositif d'immobilisation pendant le transport selon l'une quelconque des revendications 1 et 2, **caractérisé en ce qu'**une surface périphérique intérieure (6.1) de la région essentiellement cylindrique (6') de la bague de retenue (6) est centrée au niveau d'une surface de boîtier (1.1) du côté de la périphérie extérieure, la surface périphérique intérieure (6.1) étant réalisée entre l'épaulement (6.2) et les crochets d'encliquetage (6.3) .

4. Dispositif d'immobilisation pendant le transport selon l'une quelconque des revendications 1 à 3, **caractérisé en ce que** les crochets d'encliquetage (6.3) sont libérés dans l'état de montage.

5. Dispositif d'immobilisation pendant le transport selon l'une quelconque des revendications 2 à 4, **caractérisé en ce que** les crochets d'encliquetage (6.3) présentent des surfaces frontales axiales (6.4) qui limitent le mouvement du piston (2) lorsqu'elles viennent en contact avec la surface de butée (1.2).

6. Dispositif d'immobilisation pendant le transport selon l'une quelconque des revendications 2 à 5, **caractérisé en ce qu'**un ressort (8) pousse le piston (2) contre la bague de retenue (6) et la bague de retenue (6) agit avec les surfaces frontales axiales (6.4) des crochets d'encliquetage (6.3) contre la surface de butée (1.2), le ressort (6) s'appuyant entre le boîtier (1) et le palier de débrayage (7).

7. Dispositif d'immobilisation pendant le transport selon l'une quelconque des revendications 5 et 6, **caractérisé en ce que** les crochets d'encliquetage (6.3) présentent dans la direction vers les (6.4), une surface essentiellement cylindrique (6.5).

8. Dispositif d'immobilisation pendant le transport selon l'une quelconque des revendications 1 à 7, **caractérisé en ce que** la bague de retenue (6) se compose de métal ou de plastique.
